(19) Europäisches Patentamt
European Patent Office
Office européen des brevets

(11) **EP 3 956 636 B1**

(12) **EUROPÄISCHE PATENTSCHRIFT**

(45) Veröffentlichungstag und Bekanntmachung des Hinweises auf die Patenterteilung:
**14.06.2023  Patentblatt 2023/24**

(21) Anmeldenummer: **20712525.3**

(22) Anmeldetag: **17.03.2020**

(51) Internationale Patentklassifikation (IPC):
**G01C 21/34** *(2006.01)*

(52) Gemeinsame Patentklassifikation (CPC):
**G01C 21/3469**

(86) Internationale Anmeldenummer:
**PCT/EP2020/057254**

(87) Internationale Veröffentlichungsnummer:
**WO 2020/212049 (22.10.2020 Gazette 2020/43)**

(54) **VERFAHREN UND VORRICHTUNG ZUM BERECHNEN EINES ENERGIEVERBRAUCHS EINES KRAFTFAHRZEUGS AUF EINER FAHRTROUTE**

METHOD AND DEVICE FOR CALCULATING THE ENERGY CONSUMPTION OF A MOTOR VEHICLE ON A TRAVEL ROUTE

PROCÉDÉ ET DISPOSITIF DE CALCUL D'UNE CONSOMMATION D'ÉNERGIE D'UN VÉHICULE AUTOMOBILE SUR UN ITINÉRAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2019   DE 102019205698**

(43) Veröffentlichungstag der Anmeldung:
**23.02.2022   Patentblatt 2022/08**

(73) Patentinhaber: **VOLKSWAGEN AKTIENGESELLSCHAFT**
**38440 Wolfsburg (DE)**

(72) Erfinder:
• **ASCHE, Christian**
  **30449 Hannover (DE)**
• **KRIEGER, Wjatscheslaw**
  **10115 Berlin (DE)**
• **GREGOR, Jannis Felix**
  **29465 Schnega (DE)**
• **KOPP, Oliver**
  **39128 Magdeburg (DE)**

(56) Entgegenhaltungen:
**DE-A1-102010 039 569     DE-A1-102016 223 299**
**US-A- 5 913 917     US-A1- 2007 112 475**

**Beschreibung**

Die Erfindung betrifft ein Verfahren und eine Vorrichtung zum Berechnen eines Energieverbrauchs eines Kraftfahrzeugs auf einer Fahrtroute.

Es ist bekannt, bei brennkraftgetriebenen und elektrisch angetriebenen Kraftfahrzeugen eine Reichweitenprognose auf Grundlage eines vergangenen und/oder aktuellen Energieverbrauchs des Kraftfahrzeugs abzuschätzen.

Aus der US 2014/0214267 A1 sind ein Verfahren, ein Fahrzeug und ein Server bekannt, mit denen ein Energieverbrauch und eine Reichweite eines Fahrzeugs auf Grundlage von gesammelten Energieverbrauchsdaten einer Fahrtroute geschätzt werden kann.

Aus der DE 10 2010 039 596 A1 ist ein Verfahren zum Ermitteln einer Energieaufwandsinformation für eine Fahrt eines Landfahrzeugs bekannt, das einen Schritt des Bestimmens einer Kraftwirkung eines Windes bezüglich des Landfahrzeugs basierend auf einer Navigationsinformation und einer Windinformation aufweist, wobei die Navigationsinformation eine Position und/oder eine Ausrichtung und/oder eine Fahrgeschwindigkeit des Landfahrzeugs repräsentiert und die Windinformation eine orts- und/oder zeitabhängige meteorologisch bedingte Windgeschwindigkeit und/oder eine orts- und/oder zeitabhängige meteorologisch bedingte Windrichtung repräsentiert. Ferner umfasst das Verfahren einen Schritt des Ermittelns der Energieaufwandsinformation basierend auf der bestimmten Kraftwirkung.

Aus der US 5 913 917 A sind ein Verfahren und eine Vorrichtung zur Vorhersage oder Schätzung des Kraftstoff- oder Energieverbrauchs eines Fahrzeugs über eine gewählte Fahrtroute bekannt, wobei die Route eine Vielzahl von Straßenabschnitten umfasst. Der Kraftstoffverbrauch für jeden Straßenabschnitt wird unter Verwendung von Informationen über eine oder mehrere der folgenden Variablen geschätzt: repräsentative Höhe des Straßenabschnitts; repräsentative Steigung des Straßenabschnitts; geschätzte durchschnittliche Fahrzeuggeschwindigkeit entlang des Straßenabschnitts; Länge des Straßenabschnitts; Zustand des Straßenabschnitts; Zustand der Fahrzeugreifen; erwartete Verkehrsdichte entlang des Straßenabschnitts; anwendbare Beschränkungen für den Fahrzeugbetrieb entlang des Straßenabschnitts; erwartete Umgebungswetterbedingungen entlang des Straßenabschnitts; Fahrzeugzubehör, das verwendet wird; und Fahrzeugfahrerprofilinformationen. Wetterbedingungen unterwegs, wie etwa lokale Windgeschwindigkeit und -richtung, können gemessen und verwendet werden, um die Genauigkeit des vorhergesagten Kraftstoffverbrauchs zu verbessern. Der Kraftstoffverbrauch kann zunächst geschätzt werden, kann unterwegs unter Verwendung des tatsächlichen Kraftstoffverbrauchs für den bereits zurückgelegten Streckenabschnitt neu geschätzt werden und kann für eine Rückfahrt auf derselben Strecke geschätzt werden.

Der Kraftstoffverbrauch kann geschätzt werden, wenn die Route ursprünglich nicht angegeben ist. Der verbrauchte Kraftstoff kann elektrische Ladung, Benzin, Kerosin, Erdgas, Dieselkraftstoff oder ein ähnlicher Kraftstoff sein.

Aus der US 2007/0112475 A1 sind Vorrichtungen, Systeme und Verfahren zum Verwalten des Stromverbrauchs eines Kraftfahrzeugs und dadurch zum Optimieren des Stromverbrauchs des Fahrzeugs bekannt. Die Vorrichtungen und Systeme zum Verwalten des Energieverbrauchs des Fahrzeugs umfassen typischerweise eine Energieverwaltungslogik, die eine angelegte Leistung für den Fahrzeugmotor basierend auf Informationen berechnen kann, die von der externen Umgebung des Fahrzeugs bereitgestellt werden, dem Betriebsstatus des Fahrzeugs, einem oder mehreren Befehleingaben von einem Fahrer und einen oder mehrere Betriebsparameter des Fahrzeugs.

Aus der DE 10 2016 223 299 A1 sind ein Verfahren und eine Vorrichtung zum Betreiben eines Kraftfahrzeugs bekannt. Dabei wird eine Fahrstrategie in Abhängigkeit eines während einer bevorstehenden Fahrt auf das Kraftfahrzeug einwirkend prädizierten Windes gewählt.

Der Erfindung liegt die Aufgabe zu Grunde, ein Verfahren und eine Vorrichtung zum Berechnen eines Energieverbrauchs eines Kraftfahrzeugs auf einer Fahrtroute zu schaffen, bei denen ein Energieverbrauch verbessert berechnet werden kann.

Die Aufgabe wird erfindungsgemäß durch ein Verfahren mit den Merkmalen des Patentanspruchs 1 und eine Vorrichtung mit den Merkmalen des Patentanspruchs 9 gelöst. Vorteilhafte Ausgestaltungen der Erfindung ergeben sich aus den Unteransprüchen.

Das Verfahren und die Vorrichtung ermöglichen es, einen Energieverbrauch des Kraftfahrzeugs verbessert zu berechnen, da sowohl eine Windgeschwindigkeit als auch eine Windrichtung beim Berechnen berücksichtigt werden. Effekte, die sich auf den Energieverbrauch auswirken, wie beispielsweise ein am Kraftfahrzeug angreifender Gegenwind, können daher mit in die Berechnung einfließen. Insbesondere wenn auf Grundlage des bereitgestellten Verbrauchssignals eine Reichweitenprognose erfolgen soll, kann diese Reichweitenprognose den zu erwartenden Energieverbrauch verbessert, das heißt realitätsnäher, schätzen bzw. abbilden.

Das Kraftfahrzeug ist insbesondere ein elektrisch angetriebenes Kraftfahrzeug, das eine Batterie zum Speichern elektrischer Energie aufweist. Das elektrisch angetriebene bzw. batteriebetriebene Kraftfahrzeug ist insbesondere ein Elektrofahrzeug, kann jedoch auch ein Hybridfahrzeug sein. Prinzipiell können das Verfahren und die Vorrichtung jedoch auch für ein brennkraftgetriebenes Kraftfahrzeug verwendet werden.

Eine Fahrtroute ist insbesondere eine geplante Fahrtroute. Die Fahrtroute wird beispielsweise durch Vorgabe einer Startposition, beispielsweise einer aktuellen Position des Kraftfahrzeugs, gegebenenfalls weiterer Zwischenzielen

und einer Zielposition, welche beispielsweise von einem Fahrer des Kraftfahrzeugs vorgegeben werden, bestimmt oder ausgewählt. Einzelne Positionen oder Routenabschnitte der Fahrtroute sind insbesondere mit (zukünftigen) Zeitpunkten verknüpft, zu denen das Kraftfahrzeug die jeweilige Position erreichen wird. Ferner umfasst die Fahrtroute insbesondere auch Werte zu Fahrzeuggeschwindigkeiten und/oder Durchschnittsgeschwindigkeiten und/oder Angaben zu Steigungen für die einzelnen Positionen und/oder Routenabschnitte. Alternativ können Fahrzeuggeschwindigkeiten und/oder Durchschnittsgeschwindigkeiten und/oder Steigungen für einzelne Positionen und/oder Routenabschnitte der Fahrtroute auch geschätzt werden.

Ein Routenabschnitt umfasst zumindest eine Teilmenge von Positionen einer Fahrtroute. Eine Fahrtroute kann sich aus mehreren Routenabschnitten zusammensetzen.

Das Ermitteln der Fahrzeuggeschwindigkeit erfolgt insbesondere auf Grundlage mindestens einer zu erwartenden Geschwindigkeit des Kraftfahrzeugs auf der Fahrtroute. Diese kann beispielsweise auf Grundlage einer Karte mittels der Ermittlungseinrichtung ermittelt werden, beispielsweise durch Abfragen einer mit einer Position in der Karte verknüpften Fahrzeuggeschwindigkeit. Das Abfragen erfolgt beispielswiese bei einer Navigationseinrichtung.

Das Ermitteln der Fahrzeugrichtung erfolgt insbesondere auf Grundlage mindestens einer zu erwartenden Richtung, in die das Kraftfahrzeug auf der Fahrtroute fahren wird (Fahrtrichtung). Diese Richtung kann beispielsweise auf Grundlage einer Karte mittels der Ermittlungseinrichtung ermittelt werden, beispielsweise durch Abfragen einer mit einer Position in der Karte verknüpften Fahrzeugrichtung. Das Abfragen erfolgt beispielswiese bei einer Navigationseinrichtung. Im einfachsten Fall ist die Fahrzeugrichtung ein Hauptkurs, welcher derart gestaltet ist, dass er Start- und Zielposition in Luftlinie verbindet.

Die mindestens eine Fahrzeuggeschwindigkeit und die mindestens eine Fahrzeugrichtung werden insbesondere paarweise, das heißt miteinander verknüpft, ermittelt, beispielsweise in Form eines aus der Fahrzeuggeschwindigkeit und der Fahrzeugrichtung gebildeten Vektors.

Das Ermitteln der mindestens einen Windrichtung und der mindestens einen Windgeschwindigkeit erfolgt insbesondere auf Grundlage von aktuellen und/oder vorhergesagten Umfeld- und/oder Wetterdaten, die beispielsweise mittels der Ermittlungseinrichtung bei einem Wetterdienst für die Fahrtroute abgefragt werden. Die Windrichtung kann hierbei beliebig zum Kraftfahrzeug bzw. zu einer Fahrzeugrichtung orientiert sein. Insbesondere werden jedoch die Anteile des Windes betrachtet, die als Gegenwind (entgegen der Fahrtrichtung des Kraftfahrzeugs) oder als Rückenwind (in Richtung der Fahrtrichtung des Kraftfahrzeugs) ausgebildet sind. Die Umfeld- und/oder Wetterdaten umfassen im einfachsten Fall eine gemittelte Windrichtung und eine gemittelte Windgeschwindigkeit für die Fahrtroute. Die Windrichtung und die Windgeschwindigkeit werden insbesondere paarweise, das heißt miteinander verknüpft, ermittelt, beispielsweise in Form eines aus der Windrichtung und der Windgeschwindigkeit gebildeten Vektors.

Teile der Vorrichtung, insbesondere die Ermittlungseinrichtung und die Berechnungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird.

Es kann vorgesehen sein, dass die Vorrichtung in einem Kraftfahrzeug ausgebildet ist, beispielsweise als Teil eines Bordcomputers und/oder einer Navigationseinrichtung. Alternativ kann auch vorgesehen sein, dass Teile der Vorrichtung in einem Smartphone, einem Webportal oder einem Server ausgebildet sind. Insbesondere kann das Verfahren auf einem Smartphone, unterstützt durch den Server, ausgeführt werden, wobei dies durch eine entsprechende Benutzerschnittstelle (z.B. App) unterstützt wird.

Es ist vorgesehen, dass die mindestens eine Fahrzeuggeschwindigkeit und/oder die mindestens eine Fahrzeugrichtung und/oder die mindestens eine Windrichtung und/oder die mindestens eine Windgeschwindigkeit für einzelne Routenabschnitte der Fahrtroute separat ermittelt und berücksichtigt werden. Hierdurch kann ein detaillierteres und daher realitätsnäheres Abbild von aktuellen bzw. vorhergesagten Windrichtungen und Windgeschwindigkeiten berücksichtigt werden, sodass eine Berechnung für den Energieverbrauch einen tatsächlich auf der Fahrtroute auftretenden Energieverbrauch verbessert abbildet. Das Aufteilen in Routenabschnitte erfolgt in Abhängigkeit einer verfügbaren örtlichen Auflösung von Daten zu Windrichtungen und/oder Windgeschwindigkeiten. Hierdurch kann eine zum Berechnen erforderliche Rechenleistung minimiert bzw. im Hinblick auf eine vorhandene Auflösung optimiert werden. Je nach Auflösung zur Verfügung stehender bzw. von der Ermittlungseinrichtung beispielsweise bei einem Wetterdienst abgefragter Winddaten wird die geplante Fahrtroute dann in Routenabschnitte unterteilt, wobei jeder Routenabschnitt mit einem verfügbaren Wert für die Windrichtung und die Windgeschwindigkeit korrespondiert.

In einer Ausführungsform ist vorgesehen, dass das Berechnen auf Grundlage einer, insbesondere individuell, für das Kraftfahrzeug bereitgestellten Verbrauchstabelle erfolgt, wobei in der Verbrauchstabelle ein Energieverbrauch des Kraftfahrzeugs in Abhängigkeit zumindest einer Fahrzeuggeschwindigkeit und einer Steigung hinterlegt ist. Die Verbrauchstabelle wird hierbei auf Grundlage von für verschiedene Kombinationen aus Steigung und Fahrzeuggeschwindigkeit gesammelten Verbrauchsdaten zusammengestellt. Für jeden Fahrzeugtyp muss hierbei auf Grund unterschiedlicher Eigenschaften der Kraftfahrzeuge (z.B. anderer cw-Wert, andere Motorisierung, andere Fahrzeugmasse etc.) eine eigene Verbrauchstabelle bereitgestellt werden.

Es kann vorgesehen sein, dass eine Verbrauchstabelle zusätzlich fahrerabhängig erstellt wird. Dies kann beispielsweise erfolgen, indem die Verbrauchstabelle angelernt wird. Hierzu werden beispielsweise für kürzere Streckenabschnitte Verbrauchsdaten sowie eine Fahrzeuggeschwindigkeit und eine Steigung erfasst, über mehrere gleichartige Streckenabschnitte gemittelt und in der Verbrauchstabelle hinterlegt. Insbesondere unterschiedliche Fahrstile von Fahrern können hierdurch verbessert berücksichtigt werden.

In einer Weiterbildung ist vorgesehen, dass die Verbrauchstabelle nach Geschwindigkeitsklassen und/oder Steigungsklassen eingeteilt bzw. geordnet ist. Dies ermöglicht eine Mittelung über die Werte in der Verbrauchstabelle. So kann beispielsweise vorgesehen sein, dass ein Energieverbrauch für Geschwindigkeitsklassen mit einer Klassenbreite von jeweils 10 oder 20 km/h in der Verbrauchstabelle hinterlegt ist. Steigungen und Gefälle können beispielsweise nach Klassen mit Klassenbreiten von jeweils einem Prozent Anstieg/Abstieg unterteilt sein.

In einer Ausführungsform ist vorgesehen, dass das Berechnen auf Grundlage mindestens einer effektiven Anströmgeschwindigkeit erfolgt, wobei die mindestens eine effektive Anströmgeschwindigkeit auf Grundlage der ermittelten mindestens einen Fahrzeuggeschwindigkeit, der ermittelten mindestens einen Fahrzeugrichtung, der ermittelten mindestens einen Windrichtung und der ermittelten mindestens einen Windgeschwindigkeit berechnet wird. Insbesondere erfolgt das Berechnen der effektiven Anströmgeschwindigkeit durch Vektoraddition. Hierzu werden die ermittelte Fahrzeuggeschwindigkeit, die ermittelte Fahrzeugrichtung, die ermittelte Windrichtung und die ermittelte Windgeschwindigkeit jeweils als Vektoren dargestellt. Aus der ermittelten Fahrzeuggeschwindigkeit und der ermittelten Fahrzeugrichtung wird hierbei zusammen ein Vektor gebildet. Ebenso wird zusammen ein Vektor aus der ermittelten Windrichtung und der ermittelten Windgeschwindigkeit gebildet. Ein auf diese Weise gebildeter Fahrzeuggeschwindigkeitsvektor und ein auf diese Weise gebildeter Windgeschwindigkeitsvektor werden anschließend im Rahmen einer Vektoraddition summiert. Durch Projektion des Summenvektors aus dem Fahrzeuggeschwindigkeitsvektor und dem Windgeschwindigkeitsvektor auf die Fahrzeugrichtung erhält man die effektive Anströmgeschwindigkeit. Durch Verwendung der effektiven Anströmgeschwindigkeit ist es möglich, eine vorhandene Verbrauchstabelle weiterhin näherungsweise benutzen zu können. Hierzu wird anstatt der Fahrzeuggeschwindigkeit die effektive Anströmgeschwindigkeit beim Ermitteln des Energieverbrauchs aus der Verbrauchstabelle verwendet.

Es kann vorgesehen sein, dass die Verbrauchstabelle für eine Verwendung mit der effektiven Anströmgeschwindigkeit angepasst wird, beispielsweise indem ein Verbrauch angepasst wird. Insbesondere kann vorgesehen sein, dass ein Verbrauch auf Grundlage der berechneten effektiven Anströmgeschwindigkeit angelernt wird, indem ein realer Verbrauch erfasst und/oder berechnet wird und anschließend mit den in der Verbrauchstabelle hinterlegten Werten abgeglichen, insbesondere fusioniert, wird.

In einer Ausführungsform ist vorgesehen, dass die ermittelte mindestens eine Windgeschwindigkeit vor dem Berechnen auf Grundlage von lokalen Umfeldbedingungen angepasst wird. Hierdurch können beispielsweise von einem Wetterdienst bereitgestellte Windgeschwindigkeiten und Windrichtungen an lokale Umfeldbedingungen angepasst werden. Eine lokale Umfeldbedingung kann beispielsweise eine im Umfeld des Kraftfahrzeugs auf der geplanten Fahrtroute angeordnete Vegetation und/oder Bebauung sein. Eine solche Vegetation kann beispielsweise ein Busch, eine Hecke oder ein Baum sein. Eine Bebauung kann beispielsweise eine Mauer, ein Haus oder ein Lärmschutz sein. Das Anpassen der ermittelten mindestens einen Windgeschwindigkeit erfolgt insbesondere durch Verringern der ermittelten mindestens einen Windgeschwindigkeit um einen bestimmten Faktor. Dieser Faktor kann beispielsweise auf Grundlage von Simulationen und/oder empirischen Versuchen ermittelt werden. Hierdurch kann die Tatsache berücksichtigt werden, dass von einem Wetterdienst bereitgestellte Windgeschwindigkeiten in der Regel nicht in Bodennähe (1 bis 2 Meter über dem Boden), sondern in größerer Höhe (ab 10 m) erfasst oder für dieses geschätzt wurden. Eine Bebauung und/oder eine Vegetation sorgen in der Regel jedoch dafür, dass Windgeschwindigkeiten und Windrichtungen in Bodennähe verändert sind gegenüber größeren Höhen.

In einer Ausführungsform ist vorgesehen, dass zumindest ein Teil der Verbrauchstabelle für das Kraftfahrzeug auf Grundlage von vorhandenen Verbrauchsdaten durch Extrapolation geschätzt wird. Eine solche Schätzung erfolgt beispielsweise für Kombinationen aus Fahrzeuggeschwindigkeiten und Steigungen, welche üblicherweise nicht anlernbare Randwertprobleme mit sich bringen (z.B. in Fällen, in denen eine effektive Anströmgeschwindigkeit größer als eine Maximalgeschwindigkeit des Fahrzeugs ist).

In einer Ausführungsform ist vorgesehen, dass auf Grundlage des berechneten Energieverbrauchs eine Ladestopp-Planungsstrategie für eine Batterie des Kraftfahrzeugs ermittelt wird. Die Ladestopp-Planungsstrategie für die Batterie des Kraftfahrzeugs wird hierbei unter Berücksichtigung eines Ladezustand der Batterie und verfügbarer Ladestationen auf der Fahrtroute des Kraftfahrzeugs ermittelt. Ist beispielsweise aufgrund eines Gegenwindes ein Energieverbrauch des Kraftfahrzeugs erhöht, so kann ein zusätzlicher Ladestopp vorgesehen sein. Das Ermitteln erfolgt insbesondere durch Abschätzen einer Reichweite auf Grundlage des berechneten Energieverbrauchs und des Ladezustands der Batterie.

In einer weiteren Ausführungsform ist vorgesehen, dass das Berechnen des Energieverbrauchs und/oder das Ausgeben des Verbrauchssignals unter Berücksichtigung eines Dämpfungsfaktors erfolgt. Ein solcher Dämpfungsfaktors verhindert eine sprunghafte Änderung des Energieverbrauchs. Einfach ausgedrückt ist oder wird der Dämpfungsfaktors derart gewählt, dass einem Fahrer des Kraftfahrzeugs eine Änderung eines berechneten Energieverbrauchs zu jeder Zeit nachvollziehbar erscheint. Insbesondere soll vermieden werden, dass aufgrund einer kurzfristigen Erhöhung des Energieverbrauchs, beispielsweise weil routenabschnittsweise ein erhöhter Gegenwind auftritt, eine Ladestopp-Planungsstrategie sich sprunghaft ändert, obwohl sich eine Gesamtsituation - über die gesamte Fahrtroute betrachtet - nicht stark verändert hat. Der Dämpfungsfaktor ist beispielsweise als Filterkoeffizient ausgebildet, der angibt, wie stark ein zu einem früheren Zeitpunkt ermittelter Energieverbrauch beim Berechnen eines aktuellen Wertes für den Energieverbrauch berücksichtigt wird. Hierdurch kann eine sprunghafte Veränderung und eine Oszillation des Energieverbrauchs verhindert werden.

Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:

Fig. 1    eine schematische Darstellung einer Ausführungsform der Vorrichtung zum Berechnen eines Energieverbrauchs eines batteriegetriebenen Kraftfahrzeugs auf einer Fahrtroute;

Fig. 2    eine schematische Darstellung zur Verdeutlichung der vektoriellen Berechnung einer effektiven Anströmgeschwindigkeit;

Fig. 3    ein schematisches Ablaufdiagramm einer in einem Kraftfahrzeug umgesetzten Ausführungsform des Verfahrens zum Berechnen eines Energieverbrauchs des Kraftfahrzeugs auf einer Fahrtroute;

Fig. 4    ein schematisches Ablaufdiagramm einer in einem Smartphone oder einem Webportal umgesetzten Ausführungsform des Verfahrens zum Berechnen eines Energieverbrauchs eines Kraftfahrzeugs auf einer Fahrtroute.

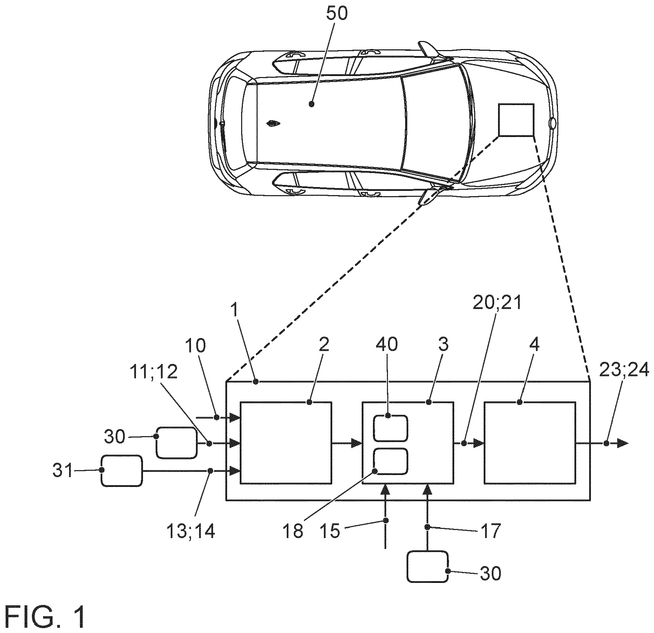

In Fig. 1 ist eine schematische Darstellung einer Ausführungsform der Vorrichtung 1 zum Berechnen eines Energieverbrauchs 20 eines insbesondere batteriegetriebenen Kraftfahrzeugs 50 auf einer Fahrtroute gezeigt. Die Vorrichtung 1 ist beispielhaft in einem Kraftfahrzeug 50 ausgebildet.

Die Vorrichtung 1 umfasst eine Ermittlungseinrichtung 2, eine Berechnungseinrichtung 3 und eine Ausgabeeinrichtung 4. Teile der Vorrichtung 1, insbesondere die Ermittlungseinrichtung 2 und die Berechnungseinrichtung 3, aber auch die Ausgabeeinrichtung 4, können einzeln oder zusammengefasst als eine Kombination von Hardware und Software ausgebildet sein, beispielsweise als Programmcode, der auf einem Mikrocontroller oder Mikroprozessor ausgeführt wird.

Eingangsseitig wird der Ermittlungseinrichtung 2 eine Fahrtroute 10 zugeführt. Die Fahrtroute 10 kann beispielsweise von einer Navigationseinrichtung bereitgestellt werden oder von einem Fahrer vorgegeben werden. Auf Grundlage der Fahrtroute 10 ermittelt die Ermittlungseinrichtung 2 Fahrzeuggeschwindigkeiten 11 auf der Fahrtroute 10, Fahrzeugrichtungen 12 auf der Fahrtroute oder den einzelnen Routensegmenten 10 sowie mindestens eine Windrichtung 13 und mindestens eine Windgeschwindigkeit 14 auf der Fahrtroute als Hauptwindrichtung oder als abschnittsweise ermittelte Windrichtung auf den Routensegmenten.

Die Fahrzeuggeschwindigkeiten 11 werden beispielsweise auf Grundlage einer von der Navigationseinrichtung bereitgestellten Straßenkarte 30 ermittelt, an der für einzelne Positionen oder Routenabschnitte der Fahrtroute 10 jeweils Maximalgeschwindigkeiten und/oder Durchschnittsgeschwindigkeiten hinterlegt sind, welche von der Ermittlungseinrichtung 2 abgefragt werden. Die Fahrzeugrichtung 12 kann ebenfalls auf Grundlage der bereitgestellten Straßenkarte 30 ermittelt werden, indem auf Grundlage der miteinander verknüpften Routenabschnitte, einer Startposition, einer Zielposition und einer Straßenführung für jede Position oder für jeweils einen der Routenabschnitte eine Fahrzeugrichtung bzw. -orientierung ermittelt bzw. abgefragt wird. Die Fahrzeuggeschwindigkeiten 11 und die Fahrzeugrichtungen 12 werden insbesondere paarweise, das heißt miteinander verknüpft, beispielsweise in Form eines jeweils aus der Fahrzeuggeschwindigkeit 11 und der Fahrzeugrichtung 12 gebildeten Vektors, ermittelt. Anschließend ist für jede Position auf der Fahrtroute 10 bzw. jeden Routenabschnitt bekannt, in welche (Fahrzeug-)Richtung das Kraftfahrzeug 50 mit welcher Fahrzeuggeschwindigkeit 11 fährt.

Die Windrichtungen 13 und die Windgeschwindigkeiten 14 können beispielsweise für einzelne Positionen auf der Fahrtroute oder für Routenabschnitte auf der Fahrtroute von einem Wetterdienst 31 abgefragt werden. Dies kann beispielsweise über eine entsprechend hierfür ausgebildete Kommunikationsschnittstelle (nicht gezeigt) erfolgen. Insbesondere kann die Ermittlungseinrichtung 2 auf Grundlage der Fahrtroute 10 bzw. zugehöriger Positionen bzw. Routenabschnitte bei dem Wetterdienst 31 die jeweiligen Windrichtungen 13 und die jeweiligen Windgeschwindigkeiten 14 für die Fahrtroute 10 bzw. die zugehörigen Positionen oder einzelnen Routenabschnitte abfragen. Die Windrichtungen 13 und die Windgeschwindigkeiten 14 werden jeweils insbesondere paarweise, das heißt miteinander verknüpft, beispielsweise in Form eines aus der Windrichtung 13 und der Windgeschwindigkeit 14 gebildeten Vektors, ermittelt.

Die Werte für die ermittelten Fahrzeuggeschwindigkeiten 11, die ermittelten Fahrzeugrichtungen 12, die ermittelten Windrichtungen 13 und die ermittelten Windgeschwindigkeiten 14 werden positionsweise bzw. routenabschnittsweise der Berechnungseinrichtung 3 zugeführt.

Die Berechnungseinrichtung 3 berechnet einen Energieverbrauch 20 auf Grundlage der ermittelten Fahrzeuggeschwindigkeiten 11, der ermittelten Fahrzeugrichtungen 12, der ermittelten Windrichtungen 13 und der ermittelten Windgeschwindigkeiten 14. Im einfachsten Fall wird diese Berechnung für die gesamte Fahrtroute 10 ein einziges Mal durchgeführt, wobei jeweils über die einzelnen Routensegmente der gesamten Fahrtroute 10 die jeweiligen Werte für die ermittelte Fahrzeuggeschwindigkeit 11, die ermittelte Fahrzeugrichtung 12, die ermittelte Windrichtung 13 und die ermittelte Windgeschwindigkeit 14 verwendet werden.

Es kann jedoch auch vorgesehen sein, dass die Berechnungseinrichtung 3 für jeden Routenabschnitt auf der Fahrtroute 10 einen Energieverbrauch abschnittsweise berechnet und die einzelnen Werte anschließend zu einem gesamten Energieverbrauch 20 aufsummiert.

Die Ausgabeeinrichtung 4 gibt den berechneten Energieverbrauch 20 als Verbrauchssignal 23 aus bzw. stellt dieses bereit. Das Verbrauchssignal 23 kann insbesondere in Form eines digitalen Datenpakets ausgegeben bzw. bereitgestellt werden.

Es kann vorgesehen sein, dass das Berechnen auf Grundlage einer für das Kraftfahrzeug 50 bereitgestellten Verbrauchstabelle 15 erfolgt, wobei in der Verbrauchstabelle 15 ein Energieverbrauch des Kraftfahrzeugs 50 in Abhängigkeit zumindest einer Fahrzeuggeschwindigkeit und einer Steigung hinterlegt ist.

Es kann weiterbildend vorgesehen sein, dass die Verbrauchstabelle 15 nach Geschwindigkeitsklassen und/oder Steigungsklassen eingeteilt bzw. geordnet ist.

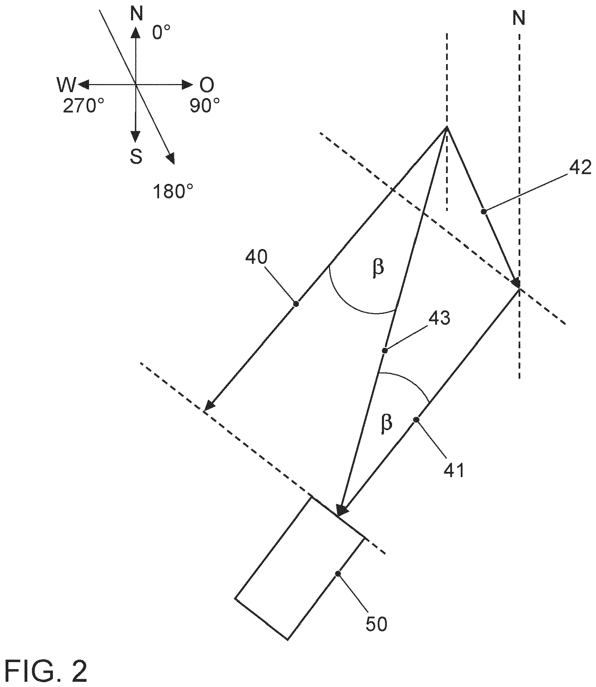

Weiter kann vorgesehen sein, dass das Berechnen auf Grundlage einer effektiven Anströmgeschwindigkeit 40 erfolgt, wobei die effektive Anströmgeschwindigkeit 40 auf Grundlage der jeweils zugehörigen ermittelten Fahrzeuggeschwindigkeit 11, der ermittelten Fahrzeugrichtung 12, der ermittelten Windrichtung 13 und der ermittelten Windgeschwindigkeit 14, insbesondere durch Vektoraddition, berechnet wird. Dies kann insbesondere für jeden Routenabschnitt separat erfolgen. Eine schematische Darstellung zur vektoriellen Berechnung der effektiven Anströmgeschwindigkeit 40 ist in Fig. 2 dargestellt.

Es kann vorgesehen sein, dass die mindestens eine ermittelte Windgeschwindigkeit 14 vor dem Berechnen auf Grundlage von lokalen Umfeldbedingungen 17 angepasst wird. Die lokalen Umfeldbedingungen 17 können beispielsweise aus der Straßenkarte 30 abgefragt werden und z.B. eine Bebauung und/oder eine Vegetation umfassen. Auf Grundlage der lokalen Umfeldbedingungen 17 kann eine Windgeschwindigkeit 14 für bestimmte Positionen bzw. Routenabschnitte angepasst, insbesondere verringert werden.

Es kann vorgesehen sein, dass zumindest ein Teil der Verbrauchstabelle 15 für das Kraftfahrzeug 50 auf Grundlage von vorhandenen Verbrauchsdaten durch Extrapolation geschätzt wird.

Weiter kann vorgesehen sein, dass auf Grundlage des berechneten Energieverbrauchs 20 eine Ladestopp-Planungsstrategie 21 für eine Batterie des Kraftfahrzeugs 50 ermittelt wird. Dies erfolgt insbesondere durch Abschätzen einer Reichweite des Kraftfahrzeugs auf Grundlage des geschätzten Energieverbrauchs 20 und eines aktuellen und/oder zukünftigen Ladezustands der Batterie des Kraftfahrzeugs 50 sowie einem anschließenden Abgleich mit Positionen auf der Fahrtroute, in deren Nähe eine Ladestation vorhanden ist. Je nach Vorgaben in Bezug auf eine Mindestladung der Batterie werden dann Ladestationen ausgewählt, die zum Laden der Batterie angefahren werden können. Auf Grundlage dieser Auswahl wird die Ladestopp-Planungsstrategie 21 zusammengestellt. Die Ladestopp-Planungsstrategie 21 kann beispielsweise von der Berechnungseinrichtung 3 zusammengestellt werden und von der Ausgabeeinrichtung 4 als Ladestrategiesignal 24 ausgegeben werden. Das Ladestrategiesignal 24 kann beispielsweise in Form eines digitalen Datenpakets ausgegeben werden, welches einzelne Positionen von Ladestationen umfasst, an denen auf der Fahrtroute 10 ein Ladestopp empfohlen wird.

Es kann vorgesehen sein, dass das Berechnen des Energieverbrauchs 20 und/oder das Ausgeben des Verbrauchssignals 23 unter Berücksichtigung eines Dämpfungsfaktors 18 erfolgt. Der Dämpfungsfaktor 18 ist beispielsweise als Filterkoeffizient ausgebildet, der angibt, wie stark ein zu einem früheren Zeitpunkt ermittelter Energieverbrauch 20 beim Berechnen eines aktuellen Wertes für den Energieverbrauch 20 berücksichtigt wird. Hierdurch kann eine sprunghafte Veränderung und eine Oszillation des Energieverbrauchs 20 bzw. des Energieverbrauchssignals 23 verhindert werden.

In Fig. 2 ist eine schematische Darstellung zur Verdeutlichung der vektoriellen Berechnung einer effektiven Anströmgeschwindigkeit 40 gezeigt. Es wird ein Kraftfahrzeug 50 betrachtet, welches sich zu einem bestimmten Zeitpunkt auf der Fahrtroute bei Gegenwind vorwärts bewegt. Es kann vorgesehen sein, dass dieser Zeitpunkt mit einer einzelnen Position auf der Fahrtroute korrespondiert. Es kann jedoch auch vorgesehen sein, dass dieser Zeitpunkt ein gemittelter Zeitpunkt ist, der mit einer gemittelten Position für einen Routenabschnitt oder eine gesamte Fahrtroute verknüpft ist.

Es wird ein Fahrtwindgeschwindigkeitsvektor 41 betrachtet, der über eine ermittelte Fahrzeuggeschwindigkeit und eine ermittelte Fahrzeugrichtung, welche dem Fahrtwindgeschwindigkeitsvektor 41 entgegengerichtet ist, bestimmt wird, wobei die Richtung des Fahrtwindgeschwindigkeitsvektor 41 aus der ermittelten Fahrzeugrichtung und die Länge (ein Betrag), des Fahrtwindgeschwindigkeitsvektors 41 aus der Fahrzeuggeschwindigkeit bestimmt wird.

Ferner wird ein Windgeschwindigkeitsvektor 42 betrachtet, der über eine ermittelte Windrichtung und eine ermittelte Windgeschwindigkeit bestimmt wird, wobei eine Richtung des Windgeschwindigkeitsvektors 42 aus der ermittelten Windrichtung und eine Länge (ein Betrag) des Windgeschwindigkeitsvektors 42 über die ermittelte Windgeschwindigkeit bestimmt wird.

Der bestimmte Fahrtwindgeschwindigkeitsvektor 41 und der bestimmte Windgeschwindigkeitsvektor 42 werden mittels Vektoraddition zu einem Gesamtwindgeschwindigkeitsvektor 43 summiert. Von dem Gesamtwindgeschwindigkeitsvektor 43 wird anschließend lediglich die Komponente betrachtet, welche parallel zur Fahrtrichtung verläuft. Der Betrag dieser Komponente bildet dann die effektive Anströmgeschwindigkeit 40.

Mathematisch ausgedrückt ergibt sich:

$$\text{Effektive Anströmgeschwindigkeit} = |\,\text{Gesamtwindgeschwindigkeitsvektor}\,| * \cos \beta,$$

wobei $\beta$ der Winkel zwischen Gesamtgeschwindigkeitsvektor 43 und Fahrzeuggeschwindigkeitsvektor 41 ist.

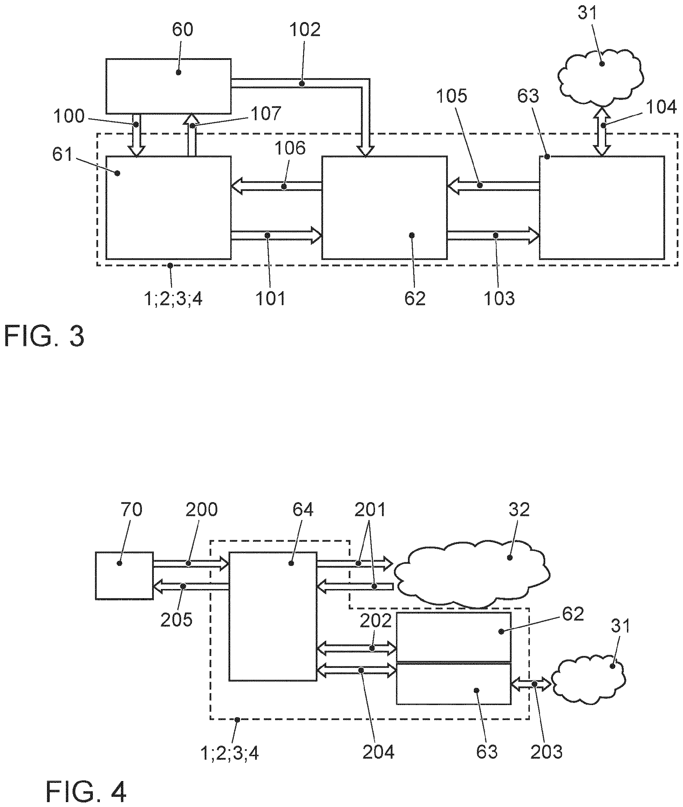

In Fig. 3 ist ein schematisches Ablaufdiagramm einer in einem Kraftfahrzeug umgesetzten Ausführungsform des Verfahrens zum Berechnen eines Energieverbrauchs eines batteriegetriebenen Kraftfahrzeugs auf einer Fahrtroute gezeigt.

Die Vorrichtung 1 zum Ausführen des Verfahrens umfasst, in integrierter Form als Module 61, 62, 63 umgesetzt, eine Ermittlungseinrichtung 2, eine Berechnungseinrichtung 3 und eine Ausgabeeinrichtung 4. Die einzelnen Module 61, 62, 63 sind beispielsweise einzeln oder zusammengefasst als eine Kombination von Hardware und Software ausgebildet, beispielsweise als Programmcode, der auf einem Mikrocontroller oder Mikroprozessor ausgeführt wird.

Eine Navigationseinrichtung 60 fragt in einem Verfahrensschritt 100 bei einem Verbrauchsmodul 61 einen Energieverbrauch und eine Reichweite ab. Das Verbrauchsmodul 61 fragt anschließend in einem Verfahrensschritt 101 bei einem Windmodul 62 einen Energieverbrauch unter Berücksichtigung mindestens einer ermittelten Windrichtung und mindestens einer ermittelten Windgeschwindigkeit ab.

Das Windmodul 62 ermittelt anschließend in einem Verfahrensschritt 102 eine oder mehrere Fahrzeuggeschwindigkeit(en) und eine oder mehrere Fahrzeugrichtung(en). Hierzu werden dem Windmodul 62 in dem Verfahrensschritt 102 von der Navigationseinrichtung 60 eine Menge an Positionen entlang der Fahrtroute sowie jeweils zugehörige Fahrzeuggeschwindigkeiten und Fahrzeugrichtungen bereitgestellt. Zum Ermitteln von Windgeschwindigkeiten und Windrichtungen fragt das Windmodul 62 in einem Verfahrensschritt 103 diese für die jeweiligen Positionen bei einem Wettermodul 63 ab.

Das Wettermodul 63 fragt die Windgeschwindigkeiten und die Windrichtungen in einem Verfahrensschritt 104 bei einem Wetterdienst 31 ab. Das Wettermodul 63 stellt die für die einzelnen Positionen abgefragten und gegebenenfalls aufbereiteten Daten in einem Verfahrensschritt 105 dem Windmodul 62 bereit.

Das Windmodul 62 berechnet aus den für die jeweiligen Positionen auf der Fahrtroute ermittelten Fahrzeuggeschwindigkeiten, den ermittelten Fahrzeugrichtungen, den ermittelten Windrichtungen und den ermittelten Windgeschwindigkeiten jeweils eine effektive Anströmgeschwindigkeit und übergibt diese in einem Verfahrensschritt 106 dem Verbrauchsmodul 61.

Das Verbrauchsmodul 61 berechnet auf Grundlage der effektiven Anströmgeschwindigkeiten einen Energieverbrauch sowie eine Reichweite auf Grundlage des berechneten Energieverbrauchs und eines Batterieladezustands einer Batterie des Kraftfahrzeugs. In einem Verfahrensschritt 107 wird der berechnete Energieverbrauch als Energieverbrauchssignal der Navigationseinrichtung 60 übergeben, welche auf Grundlage des Energieverbrauchs bzw. des Energieverbrauchssignals beispielsweise eine Ladestopp-Planungsstrategie für das batteriebetriebene Kraftfahrzeugs ermittelt und vorschlägt.

In Fig. 4 ist ein schematisches Ablaufdiagramm einer weiteren Ausführungsform des Verfahrens zum Berechnen eines Energieverbrauchs eines batteriegetriebenen Kraftfahrzeugs auf einer Fahrtroute gezeigt.

Die Vorrichtung 1 zum Ausführen des Verfahrens umfasst, in integrierter Form als Module 62, 63, 64 umgesetzt, eine Ermittlungseinrichtung 2, eine Berechnungseinrichtung 3 und eine Ausgabeeinrichtung 4. Die einzelnen Module 62, 63, 64 sind beispielsweise einzeln oder zusammengefasst als eine Kombination von Hardware und Software ausgebildet, beispielsweise als Programmcode, der auf einem Mikrocontroller oder Mikroprozessor ausgeführt wird. Die Vorrichtung 1 ist beispielsweise als zentraler Server ausgebildet, der einen Reichweitenberechnungsservice bereitstellt.

Auf einem Smartphone oder Webportal 70 ist beispielsweise eine Routenplanungs-App installiert. Das Smartphone 70 bzw. die App übergibt in einem Verfahrensschritt 200 eine Fahrtroute an ein Verbrauchsservicemodul 64 und fragt einen Energieverbrauch und eine Reichweite beim Verbrauchsservicemodul 64 ab.

Zum Ermitteln fragt das Verbrauchsservicemodul 64 in einem Verfahrensschritt 201 bei einem Navigationsdienstleister 32 Daten zur Fahrtroute ab, insbesondere Fahrzeuggeschwindigkeiten, Steigungen und eine Fahrtdauer für einzelne Routenabschnitte der Fahrtroute. Diese Daten zur Fahrtroute werden an das Verbrauchsservicemodul 64 übergeben.

Das Verbrauchsservicemodul 64 fragt anschließend in einem Verfahrensschritt 202 bei einem Windmodul 62 einen Energieverbrauch unter Berücksichtigung mindestens einer ermittelten Windrichtung und mindestens einer ermittelten Windgeschwindigkeit ab. Hierzu werden dem Windmodul 62 die Fahrtroute und die Daten zur Fahrtroute übermittelt.

Zum Ermitteln werden mittels eines Wettermoduls 63, das als Schnittstelle zu einem Wetterdienst 31 dient, in einem Verfahrensschritt 203 bei dem Wetterdienst 31 Windgeschwindigkeiten und Windrichtungen für die einzelnen Routenabschnitte auf der Fahrtroute abgefragt und dem Windmodul 62 bereitgestellt. Das Windmodul 62 berechnet auf Grundlage der für die einzelnen Routenabschnitte ermittelten Fahrzeuggeschwindigkeiten, Fahrzeugrichtungen, Windrichtungen und Windgeschwindigkeiten jeweils eine effektive Anströmgeschwindigkeit und übermittelt die effektiven Anströmgeschwindigkeiten in einem Verfahrensschritt 204 an das Verbrauchsservicemodul 64.

Das Verbrauchsservicemodul 64 berechnet auf Grundlage der effektiven Anströmgeschwindigkeiten einen Energieverbrauch des batteriebetriebenen Fahrzeugs auf der Fahrtroute und eine Reichweite des Kraftfahrzeugs. Zum Berechnen der Reichweite kann von dem Verbrauchsservicemodul 64 ein Batterieladezustand abgefragt werden, beispielsweise bei einer Batteriesteuerung des Kraftfahrzeugs.

Das Verbrauchsservicemodul 64 übermittelt den berechneten Energieverbrauch und die berechnete Reichweite für das batteriebetriebene Kraftfahrzeug in einem Verfahrensschritt 205 zurück an das Smartphone oder Webportal 70, wo der berechnete Energieverbrauch beispielsweise auf einer Anzeigeeinrichtung ausgegeben wird.

**Bezugszeichenliste**

| | |
|---|---|
| 1 | Vorrichtung |
| 2 | Ermittlungseinrichtung |
| 3 | Berechnungseinrichtung |
| 4 | Ausgabeeinrichtung |
| 10 | Fahrtroute |
| 11 | Fahrzeuggeschwindigkeit |
| 12 | Fahrzeugrichtung |
| 13 | Windrichtung |
| 14 | Windgeschwindigkeit |
| 15 | Verbrauchstabelle |
| 17 | lokale Umfeldbedingungen |
| 18 | Dämpfungsfaktor |
| 20 | Energieverbrauch |
| 21 | Ladestopp-Planungsstrategie |
| 23 | Verbrauchssignal |
| 24 | Ladestrategiesignal |
| 30 | Straßenkarte |
| 31 | Wetterdienst |
| 40 | effektive Anströmgeschwindigkeit |
| 41 | Fahrtwindgeschwindigkeitsvektor |
| 42 | Windgeschwindigkeitsvektor |
| 43 | Gesamtwindgeschwindigkeitsvektor |
| 50 | Kraftfahrzeug |
| 60 | Navigationseinrichtung |
| 61 | Verbrauchsmodulmodul |
| 62 | Windmodul |
| 63 | Wettermodul |
| 64 | Verbrauchsservicemodul |
| 70 | Smartphone oder Webportal |

**Patentansprüche**

1. Verfahren zum Berechnen eines Energieverbrauchs (20) eines Kraftfahrzeugs (50) auf einer Fahrtroute (10), umfassend die Schritte:

Ermitteln mindestens einer Fahrzeuggeschwindigkeit (11) auf der Fahrtroute (10),

Ermitteln mindestens einer Fahrzeugrichtung (12) auf der Fahrtroute (10),

Ermitteln mindestens einer Windrichtung (13) und mindestens einer Windgeschwindigkeit (14) auf der Fahrtroute (10) mittels einer Ermittlungseinrichtung (2),

Berechnen eines Energieverbrauchs (20) auf Grundlage der ermittelten mindestens einen Fahrzeuggeschwindigkeit (11), der ermittelten mindestens einen Fahrzeugrichtung (12), der ermittelten mindestens einen Windrichtung (13) und der ermittelten mindestens einen Windgeschwindigkeit (14) mittels einer Berechnungseinrichtung (3),

Ausgegeben oder Bereitstellen des berechneten Energieverbrauchs (20) als Verbrauchssignal (23) mittels einer Ausgabeeinrichtung (4),

wobei die mindestens eine Fahrzeuggeschwindigkeit (11) und/oder die mindestens eine Fahrzeugrichtung (12) und/oder die mindestens eine Windrichtung (13) und/oder die mindestens eine Windgeschwindigkeit (14) für einzelne Routenabschnitte der Fahrtroute (10) separat ermittelt und berücksichtigt werden,

**dadurch gekennzeichnet, dass**

ein Aufteilen in Routenabschnitte in Abhängigkeit einer verfügbaren örtlichen Auflösung von Daten zu Windrichtungen (13) und/oder Windgeschwindigkeiten (14) erfolgt.

2. Verfahren nach Anspruch 1, **dadurch gekennzeichnet, dass** das Berechnen auf Grundlage einer für das Kraftfahrzeug (50) bereitgestellten Verbrauchstabelle (15) erfolgt, wobei in der Verbrauchstabelle (15) ein Energieverbrauch (20) des Kraftfahrzeugs (50) in Abhängigkeit zumindest einer Fahrzeuggeschwindigkeit (11) und einer Steigung hinterlegt ist.

3. Verfahren nach Anspruch 2, **dadurch gekennzeichnet, dass** die Verbrauchstabelle (15) nach Geschwindigkeitsklassen und/oder Steigungsklassen eingeteilt bzw. geordnet ist.

4. Verfahren nach einem der Ansprüche 2 oder 3, **dadurch gekennzeichnet, dass** zumindest ein Teil der Verbrauchstabelle (15) für das Kraftfahrzeug (50) auf Grundlage von vorhandenen Verbrauchsdaten durch Extrapolation geschätzt wird.

5. Verfahren nach einem der vorangegangenen Ansprüche, **dadurch gekennzeichnet, dass** das Berechnen auf Grundlage mindestens einer effektiven Anströmgeschwindigkeit (40) erfolgt, wobei die mindestens eine effektive Anströmgeschwindigkeit (40) auf Grundlage der mindestens einen ermittelten Fahrzeuggeschwindigkeit (11), der mindestens einen ermittelten Fahrzeugrichtung (12), der ermittelten mindestens einen Windrichtung (13) und der ermittelten mindestens einen Windgeschwindigkeit (14) berechnet wird.

6. Verfahren nach einem der vorangegangenen Ansprüche, **dadurch gekennzeichnet, dass** die ermittelte mindestens eine Windgeschwindigkeit (14) vor dem Berechnen auf Grundlage von lokalen Umfeldbedingungen (17) angepasst wird.

7. Verfahren nach einem der vorangegangenen Ansprüche, **dadurch gekennzeichnet, dass** auf Grundlage des berechneten Energieverbrauchs (20) eine Ladestopp-Planungsstrategie (21) für eine Batterie des Kraftfahrzeugs (50) mittels der Berechnungseinrichtung (3) ermittelt wird.

8. Verfahren nach einem der vorangegangenen Ansprüche, **dadurch gekennzeichnet, dass** das Berechnen des Energieverbrauchs (20) und/oder das Ausgeben des Verbrauchssignals (23) unter Berücksichtigung eines Dämpfungsfaktors (18) erfolgt, um eine sprunghafte Änderung des Energieverbrauchs (20) zu verhindern.

9. Vorrichtung (1) zum Berechnen eines Energieverbrauchs (20) eines Kraftfahrzeugs (50) auf einer Fahrtroute (10), umfassend:

eine Ermittlungseinrichtung (2), wobei die Ermittlungseinrichtung (2) derart ausgebildet ist, mindestens eine Fahrzeuggeschwindigkeit (11) auf der Fahrtroute (10) zu ermitteln, mindestens eine Fahrzeugrichtung (12) auf der Fahrtroute (10) zu ermitteln sowie mindestens eine Windrichtung (13) und eine mindestens Windgeschwindigkeit (14) auf der Fahrtroute (10) zu ermitteln;

eine Berechnungseinrichtung (3), wobei die Berechnungseinrichtung (3) derart ausgebildet ist, einen Energieverbrauch (20) auf Grundlage der ermittelten mindestens einen Fahrzeuggeschwindigkeit (14), der ermittelten mindestens einen Fahrzeugrichtung (12), der ermittelten mindestens einen Windrichtung (13) und der ermittelten mindestens einen Windgeschwindigkeit (14) zu berechnen; und

eine Ausgabeeinrichtung (4), wobei die Ausgabeeinrichtung (4) derart ausgebildet ist, den berechneten Energieverbrauch (20) als Verbrauchssignal (23) bereitzustellen oder auszugeben,

wobei die Ermittlungseinrichtung (2) derart ausgebildet ist, die mindestens eine Fahrzeuggeschwindigkeit (11) und/oder die mindestens eine Fahrzeugrichtung (12) und/oder die mindestens eine Windrichtung (13) und/oder die mindestens eine Windgeschwindigkeit (14) für einzelne Routenabschnitte der Fahrtroute (10) separat zu ermitteln und zu berücksichtigen, und

**dadurch gekennzeichnet, dass**

ein Aufteilen in Routenabschnitte in Abhängigkeit einer verfügbaren örtlichen Auflösung von Daten zu Windrichtungen (13) und/oder Windgeschwindigkeiten (14) erfolgt.

## Claims

1. Method for calculating an energy consumption (20) of a motor vehicle (50) on a travel route (10), comprising the steps of:

   determining at least one vehicle speed (11) on the travel route (10),
   determining at least one vehicle direction (12) on the travel route (10),
   determining at least one wind direction (13) and at least one wind speed (14) on the travel route (10) by means of a determination device (2),
   calculating an energy consumption (20) on the basis of the determined at least one vehicle speed (11), the determined at least one vehicle direction (12), the determined at least one wind direction (13) and the determined at least one wind speed (14) by means of a calculation device (3),
   outputting or providing the calculated energy consumption (20) as a consumption signal (23) by means of an output device (4),
   the at least one vehicle speed (11) and/or the at least one vehicle direction (12) and/or the at least one wind direction (13) and/or the at least one wind speed (14) being separately determined and taken into account for individual route sections of the travel route (10),
   **characterized in that**
   splitting into route sections is performed depending on an available spatial resolution of data relating to wind directions (13) and/or wind speeds (14).

2. Method according to Claim 1, **characterized in that** the calculation is performed on the basis of a consumption table (15) provided for the motor vehicle (50), an energy consumption (20) of the motor vehicle (50) being stored in the consumption table (15) depending on at least one vehicle speed (11) and one gradient.

3. Method according to Claim 2, **characterized in that** the consumption table (15) is divided or sorted in accordance with speed classes and/or gradient classes.

4. Method according to either of Claims 2 and 3, **characterized in that** at least part of the consumption table (15) for the motor vehicle (50) is estimated on the basis of existing consumption data by extrapolation.

5. Method according to one of the preceding claims, **characterized in that** the calculation is performed on the basis of at least one effective incident flow speed (40), the at least one effective incident flow speed (40) being calculated on the basis of the at least one determined vehicle speed (11), the at least one determined vehicle direction (12), the determined at least one wind direction (13) and the determined at least one wind speed (14) .

6. Method according to one of the preceding claims, **characterized in that** the determined at least one wind speed (14) is adapted on the basis of local environmental conditions (17) before the calculation.

7. Method according to one of the preceding claims, **characterized in that** a charging stop planning strategy (21) for a battery of the motor vehicle (50) is determined by means of the calculation device (3) on the basis of the calculated energy consumption (20).

8. Method according to one of the preceding claims, **characterized in that** the calculation of the energy consumption (20) and/or the outputting of the consumption signal (23) are performed taking into consideration a damping factor (18) in order to prevent a sudden change in the energy consumption (20).

9. Device (1) for calculating an energy consumption (20) of a motor vehicle (50) on a travel route (10), comprising:

a determination device (2), the determination device (2) being designed in such a way as
to determine at least one vehicle speed (11) on the travel route (10),
to determine at least one vehicle direction (12) on the travel route (10) and
to determine at least one wind direction (13) and at least one wind speed (14) on the travel route (10);
a calculation device (3), the calculation device (3) being designed in such a way as to calculate an energy consumption (20) on the basis of the determined at least one vehicle speed (14), the determined at least one vehicle direction (12), the determined at least one wind direction (13) and the determined at least one wind speed (14); and
an output device (4), the output device (4) being designed in such a way as to provide or to output the calculated energy consumption (20) as a consumption signal (23),
the determination device (2) being designed in such a way as to determine and to take into consideration the at least one vehicle speed (11) and/or the at least one vehicle direction (12) and/or the at least one wind direction (13) and/or the at least one wind speed (14) separately for individual route sections of the travel route (10), and **characterized in that**
splitting into route sections is performed depending on an available spatial resolution of data relating to wind directions (13) and/or wind speeds (14).

**Revendications**

1. Procédé pour calculer une consommation d'énergie (20) d'un véhicule automobile (50) sur un itinéraire de déplacement (10), comprenant les étapes suivantes :

détermination d'au moins une vitesse de véhicule (11) sur l'itinéraire de déplacement (10),
détermination d'au moins une direction de véhicule (12) sur l'itinéraire de déplacement (10),
détermination d'au moins une direction du vent (13) et
d'au moins une vitesse du vent (14) sur l'itinéraire de déplacement (10) au moyen d'un dispositif de détermination (2),
calcul d'une consommation d'énergie (20) sur la base de l'au moins une vitesse de véhicule (11) déterminée, de l'au moins une direction de véhicule (12) déterminée, de l'au moins une direction du vent (13) déterminée et de l'au moins une vitesse du vent (14) déterminée au moyen d'un dispositif de calcul (3),
délivrance ou fourniture de la consommation d'énergie (20) calculée sous la forme d'un signal de consommation (23) au moyen d'un dispositif de sortie (4),
l'au moins une vitesse de véhicule (11) et/ou l'au moins une direction de véhicule (12) et/ou l'au moins une direction du vent (13) et/ou l'au moins une vitesse du vent (14) étant déterminées et prises en compte séparément pour des portions d'itinéraire individuelles de l'itinéraire de déplacement (10),
**caractérisé en ce que**
une division en portions d'itinéraire s'effectue en fonction d'une résolution locale disponible de données à propos des directions du vent (13) et/ou des vitesses du vent (14).

2. Procédé selon la revendication 1, **caractérisé en ce que** le calcul est effectué sur la base d'un tableau des consommations (15) mis à disposition pour le véhicule automobile (50), une consommation d'énergie (20) du véhicule automobile (50) en fonction d'au moins une vitesse de véhicule (11) et d'une pente étant stockée dans le tableau des consommations (15).

3. Procédé selon la revendication 2, **caractérisé en ce que** le tableau des consommations (15) est divisé ou organisé d'après des classes de vitesse et/ou des classes de pente.

4. Procédé selon l'une des revendications 2 ou 3, **caractérisé en ce qu'**au moins une partie du tableau des consommations (15) est estimée par extrapolation pour le véhicule automobile (50) sur la base de données de consommation existantes.

5. Procédé selon l'une des revendications précédentes, **caractérisé en ce que** le calcul est effectué sur la base d'au moins une vitesse d'afflux (40) effective, l'au moins une vitesse d'afflux (40) effective étant calculée sur la base de l'au moins une vitesse de véhicule (11) déterminée, de l'au moins une direction de véhicule (12) déterminée, de l'au moins une direction du vent (13) déterminée et de l'au moins une vitesse du vent (14) déterminée.

6. Procédé selon l'une des revendications précédentes, **caractérisé en ce que** l'au moins une vitesse du vent (14) déterminée est adaptée avant le calcul sur la base des conditions environnantes (17) locales.

7. Procédé selon l'une des revendications précédentes, **caractérisé en ce qu'**une stratégie de planification d'arrêt de recharge (21) pour une batterie du véhicule automobile (50) est déterminée au moyen du dispositif de calcul (3) sur la base de la consommation d'énergie (20) calculée.

8. Procédé selon l'une des revendications précédentes, **caractérisé en ce que** le calcul de la consommation d'énergie (20) et/ou la délivrance du signal de consommation (23) s'effectue en tenant compte d'un facteur d'amortissement (18) afin d'éviter une modification brusque de la consommation d'énergie (20).

9. Arrangement (1) pour calculer une consommation d'énergie (20) d'un véhicule automobile (50) sur un itinéraire de déplacement (10), comprenant :

   un dispositif de détermination (2), le dispositif de détermination (2) étant configuré de manière à déterminer au moins une vitesse de véhicule (11) sur l'itinéraire de déplacement (10), à déterminer au moins une direction de véhicule (12) sur l'itinéraire de déplacement (10), à déterminer au moins une direction du vent (13) et au moins une vitesse du vent (14) sur l'itinéraire de déplacement (10) ;
   un dispositif de calcul (3), le dispositif de calcul (3) étant configuré de manière à calculer une consommation d'énergie (20) sur la base de l'au moins une vitesse de véhicule (14) déterminée, de l'au moins une direction de véhicule (12) déterminée, de l'au moins une direction du vent (13) déterminée et de l'au moins une vitesse du vent (14) déterminée ; et
   un dispositif de sortie (4), le dispositif de sortie (4) étant configuré de manière à fournir ou délivrer la consommation d'énergie (20) calculée sous la forme d'un signal de consommation (23),
   le dispositif de détermination (2) étant configuré de manière à déterminer et prendre en compte séparément l'au moins une vitesse de véhicule (11) et/ou l'au moins une direction de véhicule (12) et/ou l'au moins une direction du vent (13) et/ou l'au moins une vitesse du vent (14) pour des portions d'itinéraire individuelles de l'itinéraire de déplacement (10), et
   **caractérisé en ce que**
   une division en portions d'itinéraire s'effectue en fonction d'une résolution locale disponible de données à propos des directions du vent (13) et/ou des vitesses du vent (14).

FIG. 1

FIG. 2

60    102

100    107    105    63    31    104

61    106

1;2;3;4    101    62    103

FIG. 3

70    200    64    201    32

205

202    62    31

1;2;3;4    204    63    203

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140214267 A1
- DE 102010039596 A1
- US 5913917 A
- US 20070112475 A1
- DE 102016223299 A1